# EUROPÄISCHE PATENTSCHRIFT

(11) **EP 1 950 635 B1**
(45) Veröffentlichungstag und Bekanntmachung des Hinweises auf die Patenterteilung: **28.10.2009**
(21) Anmeldenummer: 07001083.0
(22) Anmeldetag: 18.01.2007
(51) Int. Cl.: G05B 19/05

(54) **Verfahren zum Betrieb eines Automatisierungssystems**
Method for operating an automation system
Procédé destiné au fonctionnement d'un système d'automatisation

(43) Veröffentlichungstag der Anmeldung: 30.07.2008
(73) Patentinhaber: SIEMENS AKTIENGESELLSCHAFT, 80333 München (DE)
(72) Erfinder: Pohlan, Rudolf, 76337 Waldbronn (DE)

(56) Entgegenhaltungen:
- WO-A-02/073326
- DE-A1- 10 236 801
- US-A- 5 497 315
- US-A- 5 818 711

## Beschreibung

Die Erfindung betrifft ein Verfahren zum Betrieb eines Automatisierungssystems, wobei von einem von dem Automatisierungssystem zumindest zeitweise umfassten Programmiergerät auf zumindest ein von dem Automatisierungssystem umfasstes Automatisierungsgerät Ladeobjekte, wie z. B. Programmelemente und dergleichen, transferiert werden oder transferierbar sind, wobei einem transferierten Ladeobjekt entweder ein erster oder ein zweiter Zustand zugeordnet ist, wobei der erste Zustand das Ladeobjekt als im Automatisierungssystem verfügbar kennzeichnet und der zweite Zustand das Ladeobjekt als in ein durch das Automatisierungssystem ausführbares Steuerungsprogramm integriert kennzeichnet.

Derartige Verfahren sind bekannt. In der US 5 818 711 A ist ein Verfahren beschrieben, bei dem der Status von Programmelementen in einem Programmiergerät und einem Automatisierungsgerät auch bei einer Vielzahl von Bearbeitungen visualisiert wird. Dabei ist es möglich, bei eingefügten, ersetzten oder gelöschten Programmelementen zu unterscheiden, ob diese nur in dem Programmiergerät existieren oder auf das Automatisierungsgerät übertragen wurden und in einem Programm ausgeführt werden. Diese Zustände werden durch entsprechende Indizes, wie beispielsweise I (für Inserted), R (für Replaced) und D (für Deleted), gekennzeichnet und mit durchgehenden oder gestrichelten Linien dargestellt. Die Programmelemente können beliebig oft modifiziert werden. Um in einem Programm ausgeführt werden zu können, müssen die modifizierten Zustände zuvor geladen werden. Man unterscheidet den "Remote Run Mode" (Offline-Modus) und den "Remote Programm Mode" (Online-Modus) des Programms. Wenn ein Programm im Online-Modus ausgeführt wird, können geänderte Programmelemente nicht direkt in das ausgeführte Programm übernommen werden, sondern werden erst nach dem nächsten Ladevorgang mit einbezogen. Die Änderungen können nach diesem Ladevorgang nicht mehr rückgängig gemacht werden. Im Offline-Modus können die Programmelemente nach einer Änderung in das ausführbare Programm geladen werden. Hier kann das Programm zum Testen der Änderungen ausgeführt werden, während der vorherige Stand des Programms erhalten bleibt. Die Änderungen können nach dem Test wieder rückgängig gemacht oder endgültig in das Programm geladen werden.

Außerdem sind derartige Verfahren z. B. in den Automatisierungssystemen, wie sie von der Anmelderin unter der Marke "SIMATIC" angeboten werden, implementiert. Dort werden die beiden o.g. Zustände als "Offline-Programmzustand" bzw. "Online-Programmzustand" bezeichnet.

Aufgrund einer solchen Funktionalität werden bei der Inbetriebsetzung industrieller Anlagen die jeweiligen Steuerungsprogramme für die Automatisierung einer Anlage (Automatisierungslösung) in Automatisierungsgeräte, wie z. B. speicherprogrammierbare Steuerungen (SPS), Prozessrechner oder dergleichen geladen und zum Ablauf gebracht. Die Automatisierungslösung wird dabei vorher mit Hilfe so genannter Engineering-Systeme erstellt. Ein Engineering-System stellt dazu üblicherweise ein oder mehrere Programmierwerkzeuge für jeweils unterstützte Programmiermethoden oder Programmier sprachen - wie Anweisungslisten (Statement List), Kontaktpläne (Ladder Logic), Funktionspläne (Function Block Diagram), Structured Text (ST), Continuous Function Chart (CFC), Sequential Function Chart (SFC), etc. - zur Verfügung. Insbesondere bei kontinuierlichen verfahrenstechnischen Industrie- oder Kraftwerkprozessen bedarf es einer genauen Kontrolle des geladenen Steuerungsprogramms (Online-Programmzustand) und des geänderten, noch nicht (vollständig) geladenen Programms (Offline-Programmzustand) durch den Inbetriebsetzungsingenieur, weil bei diesen Anwendungen eben nur geänderte Ladeobjekte insbesondere selektiv nachgeladen werden und nicht das gesamte Steuerungsprogramm.

Ein Problem, von dem die vorliegende Erfindung ausgeht, besteht nun darin, Programmierwerkzeuge für solche Automatisierungssysteme, also Verfahren zu deren Betrieb anzubieten, die den Inbetriebsetzungsingenieur beim Testen und Laden von Änderungen des Steuerungsprogramms, insbesondere bei einer in Betrieb befindlichen Anlage, möglichst gut unterstützen. Die besondere Anforderung liegt hier in der Verwaltung von Änderungen des Steuerungsprogramms, so dass Ladezustände einzelner Ladeobjekte dem Inbetriebsetzungsingenieur im Sinne einer Veranschaulichung, insbesondere einer optischen Veranschaulichung, transparent gemacht und Programmänderungen kontrolliert in das Automatisierungsgerät, also z. B. die speicherprogrammierbare Steuerung oder den Prozessrechner, nachgeladen und getestet werden können.

Bekannt sind auch im Bereich der Automatisierungstechnik Programmierwerkzeuge, die Funktionalität umfassen, die es ermöglichen, das Offline-Steuerungsprogramm zu ändern und anschließend zu laden sowie das Online-Steuerungsprogramm zu testen. Oft stehen für den Online-Test eine Symbolik oder graphische Rückübersetzungsinformationen nicht oder nicht mehr (vollständig) zur Verfügung, um das Steuerungsprogramm gemäß der ursprünglichen Eingabe dem Anwender darzustellen. Einige Programmierwerkzeuge erlauben deshalb einen Test (Debugging) eines Steuerungsprogramms nur dann, wenn Offline- und Online-Programmzustand übereinstimmen, d. h. die Änderungen bereits geladen wurden, also in das Steuerungsprogramm integriert sind. Die fehlende Übersicht über die Unterschiede zwischen Online- und Offline-Programmzustand wird entsprechend bei der bekannten Realisierung als noch nicht vollständig zufrieden stellend gelöst empfunden. Online- und Offline-Programmzustand werden dort synchron abgeglichen und müssen durch ein Nachladen der Änderungen auf einen identischen Stand gebracht werden, bevor ein Test sinnvoll möglich ist. Ladezustände über einzelne Ladeobjekte, also insbesondere Programmelemente, stehen dem Anwender nicht zur Verfügung.

Speziell für den Anwendungsfall von Automatisierungsvorhaben im Kraftwerksbereich bietet ein von der Anmelderin angebotenes Engineering-System für eine Programmierung mit Continuous Function Chart (CFC) bereits eine Verwaltung von Ladezuständen für die dort verwendeten, so genannten Bausteine (ein Beispiel für Ladeobjekte) an. Dem Anwender werden die Ladezustände, d. h., ob ein Baustein im CFC-Plan bereits geladen wurde oder nicht, durch eine entsprechende Farbcodierung visualisiert. Allerdings ist eine solche Visualisierung eingeschränkt bei gelöschten Bausteinen und gelöschten Verschaltungen, also Signalverbindungen. Gelöschte Bausteine werden graphisch nur noch schwach angedeutet, wobei allerdings auch die Möglichkeit des Debuggings verloren geht. Insoweit wird auch diese im Stand der Technik bekannte Lösung als noch verbesserungsfähig und verbesserungswürdig empfunden.

Zum weiteren Stand der Technik wird in diesem Zusammenhang auf die ebenfalls auf die Anmelderin zurückgehende EP 1 379 942 verwiesen, in der ein Programmiergerät mit einem Softwarewerkzeug beschrieben ist, das Mittel zum Erkennen von Softwarebausteinen im Programmiergerät, Mittel zum Erkennen von Softwarebausteinen in einem damit kommunikativ verbundenen Automatisierungsgerät und Mittel zum Vergleichen der Bausteine im Programmier- und Automatisierungsgerät umfasst. Die Ergebnisse des Vergleichs werden mit dem dort vorgeschlagenen Softwarewerkzeug zur Anzeige gebracht.

Ausgehend von dem beschriebenen Stand der Technik liegt der Erfindung als Aufgabe zugrunde, ein Verfahren zum Betrieb eines Automatisierungssystems zu schaffen, das einen Benutzer bei der Erstellung, Inbetriebsetzung und Wartung von Automatisierungslösungen noch besser unterstützt und dabei insbesondere die Möglichkeit des Debuggings vollständig oder zumindest weitestgehend erhält.

Diese Aufgabe wird erfindungsgemäß mit den Merkmalen des Anspruchs 1 gelöst. Dazu ist bei einem Verfahren der o.g. Art vorgesehen, dass jedem Ladeobjekt mindestens ein weiterer Zustand zugeordnet wird oder zuordenbar ist. Durch das Vorsehen zumindest eines weiteren Zustands über den bekannten ersten und zweiten Zustand hinaus ist es möglich, die einzelnen Ladeobjekte mit einer verbesserten Genauigkeit zu verwalten. Der erste Zustand kennzeichnet also ein Ladeobjekt als neu erstellt, aber noch nicht zum Online-Programm gehörig. Der zweite Zustand kennzeichnet ein Ladeobjekt als geladen und in das Steuerungsprogramm integriert, also als zum Online-Programm gehörig. Der nach dem Ansatz entsprechend der Erfindung hinzukommende dritte Zustand kennzeichnet ein Ladeobjekt als gelöscht, aber noch zum Online-Programm gehörig.

Die Erfindung hat den Vorteil, dass die Möglichkeit, das Steuerungsprogramm zu testen, zu jedem Zeitpunkt erhalten bleibt. Ein Steuerungsprogramm kann auf der Basis der aktuellen Quelle deshalb zu jedem Zeitpunkt getestet werden, weil im Testmodus nur bereits geladene Variablen und Anweisungen betrachtet werden. Als zum Löschen gekennzeichnete Ladeobjekte, die aber per Definition noch im Online-Programm enthalten sind, bleiben also in die Betrachtung einbezogen. Neue, noch nicht geladene Variablen und Anweisungen, also von Programmänderungen erfasste Ladeobjekte, werden zwar graphisch dargestellt, aber bei einem Programmtest ignoriert. Die vollständige Testbarkeit des Steuerungsprogramms ist damit zu jedem Zeitpunkt gegeben.

Weitere Vorteile und Einzelheiten ergeben sich anhand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bevorzugt ist vorgesehen, dass ein Transfer von Ladeobjekten vom Programmiergerät an das oder jedes Automatisierungsgerät automatisch in Abhängigkeit vom jeweiligen Zustand erfolgt. Dazu weist ein dem Steuerungsprogramm zugrunde liegendes Quellprogramm zu jedem Zeitpunkt aus, welche Ladeobjekte noch nachzuladen sind, weil diese entsprechend dem ersten Zustand markiert sind (Ladezustand: "Created"). Als zum Löschen gekennzeichnete Ladeobjekte sind entsprechend dem dritten Zustand gekennzeichnet (Ladezustand: "Deleted") und ebenfalls noch nachzuladen. Der Ladevorgang sorgt in diesem Fall für ein Löschen der Ladeobjekte im Speicher des jeweiligen Automatisierungsgerätes. Es sei noch einmal bemerkt, dass nachzuladende Ladeobjekte, also Ergebnisse von zugrunde liegenden Änderungen des Quellprogramms, den Test des Steuerungsprogramms nicht verhindern. Ladeobjekte können auch den Zustand "Initialized/Changed" haben, wenn sie noch nachzuladen sind. Solche Zustände sind den einzelnen Ladeobjekten in Form von Attributen zugeordnet, die bereits angeführten Bezeichnungen, wie "Created", "Deleted", "Initialized/Changed", usw., sind Werte, die solche Attribute annehmen können. Entsprechend können Ladeobjekte oder die diesen zugeordneten Attribute auch den Zustand "Loaded" haben, wenn sie bereits geladen sind und zum Online-Programm gehören. Ladeobjekte mit dem Zustand "Loaded", also Ladeobjekte mit dem zweiten Zustand, nehmen per Definition nicht an einem so genannten Differenz-Ladevorgang teil.

Weiter bevorzugt vorgesehen ist, dass bei dem Betriebsverfahren eine Protokollierung der jeweiligen, einem Ladeobjekt zuordenbaren Zustände sowie ein Übergang zwischen einem jeweiligen Ausgangszustand zu einem Zielzustand nach Art eines Zustandsautomaten erfolgt. Dieser Aspekt der Erfindung befasst sich also damit, dass jedes Ladeobjekt und seine graphische Repräsentation durchgängig gemäß einem definierten Ladezustandsautomaten verwaltet wird. Die graphische Repräsentation eines Ladeobjektes wird dabei abhängig vom aktuellen Ladezustand derart markiert, dass der Anwender jedem Ladeobjekt dessen Zustand direkt ansehen kann.

Nachfolgend wird ein Ausführungsbeispiel der Erfindung anhand der Zeichnung näher erläutert, das nicht als Einschränkung der Erfindung zu verstehen ist. Vielmehr sind im Rahmen der vorliegenden Offenbarung zahlreiche Abänderungen und Modifikationen möglich, insbesondere solche Varianten, die z. B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen. Einander entsprechende Gegenstände oder Elemente sind in allen Figuren mit den gleichen Bezugszeichen versehen.

Darin zeigen
- FIG 1: ein Automatisierungssystem mit einer Anzahl davon umfasster Automatisierungsgeräte und einem davon zumindest zeitweise umfassten Programmiergerät,
- FIG 2 bis FIG 6: unterschiedliche Darstellungen eines bei der Implementation des Ansatzes gemäß der Erfindung bevorzugt verwendeten Ladezustandsautomaten sowie
- FIG 7 und FIG 8: graphische Darstellungen von bei der Anwendung des erfindungsgemäßen Verfahrens erhältlichen Ergebnissen zur verbesserten Unterscheidbarkeit von Ladeobjekten.

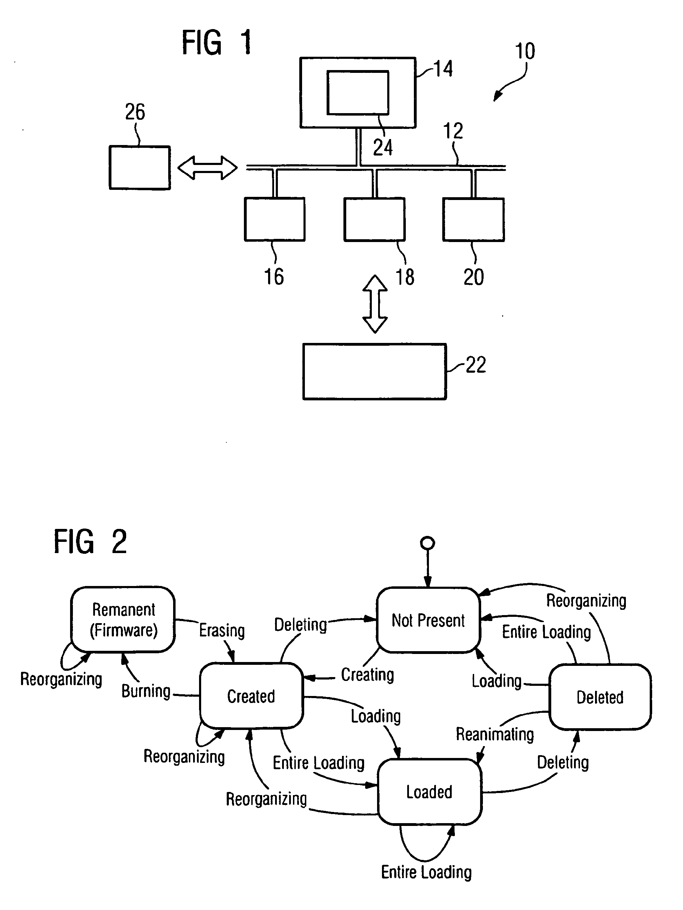

FIG 1 zeigt in schematisch vereinfachter Darstellung ein insgesamt mit 10 bezeichnetes Automatisierungssystem, das durch eine Anzahl von über einen Bus 12 oder dergleichen kommunikativ verbundene Automatisierungsgeräte 14, 16, 18, 20 gebildet wird und das insgesamt zur Steuerung und/oder Überwachung eines nicht näher dargestellten technischen Prozesses 22 vorgesehen ist und zu diesem Zweck eine in Software implementierte Automatisierungslösung, also ein Steuerungsprogramm 24 oder dergleichen, abarbeitet.

Mittels eines von dem Automatisierungssystem 10 umfassten Programmiergerätes 26 werden auf zumindest ein Automatisierungsgerät 14 bis 20 Ladeobjekte, insbesondere Programmelemente, wie z. B. Funktionsbausteine und dergleichen, zur Integration in ein zur Steuerung und/oder Überwachung des technischen Prozesses 22 vorgesehenes Steuerungsprogramm 24 transferiert.

Einem Ladeobjekt kann dabei in an sich bekannter Art ein erster Zustand, der das Ladeobjekt als für das Steuerungsprogramm 24 verfügbar kennzeichnet, oder ein zweiter Zustand, der das Ladeobjekt als in ein durch das Automatisierungssystem 10 oder eines oder mehrere davon umfasster Automatisierungsgeräte 14, 16, 18, 20 ausführbares Steuerungsprogramm 24 integriert kennzeichnet, zugeordnet sein. Darüber hinaus kann jedem Ladeobjekt mindestens ein weiterer Zustand zugeordnet sein, wie im Folgenden anhand der weiteren Figuren verdeutlicht wird, wobei das eingangs oder nachfolgend beschriebene Verfahren für alle Programmiersprachen in der Automatisierungstechnik anwendbar ist.

Eine Protokollierung der jeweiligen, einem Ladeobjekt zuordenbaren Zustände sowie ein Übergang zwischen einem jeweiligen Ausgangszustand und einem Zielzustand wird bei einer bevorzugten Ausführungsform der Erfindung nach Art eines Zustandsautomaten aufgezeichnet. Darüber hinaus legt der Ladezustandsautomat auch die möglichen Ladezustände und dazwischen vorgesehene Übergänge fest. Andere Ladezustände oder andere Übergänge als durch den Ladezustandsautomaten definiert können nicht vorkommen. Dazu sind in FIG 2 die gemäß der Erfindung vorgesehenen Zustände als "Not Present", "Deleted", "Loaded", "Created" sowie optional "Remanent" und die dazwischen zugelassenen Übergänge dargestellt.

Der Ladezustandsautomat unterscheidet dabei folgende Ladezustände für Programmelemente:
- Not Present (Urzustand)
   Ein zu löschendes Programmelement wird im Rahmen eines Ladevorgangs in diesen Zustand überführt. Das Programmelement ist damit nicht mehr existent. Aus diesem Urzustand heraus wird auch ein neues Programmelement kreiert.
- Created
   Dieser Zustand zeigt an, dass das Programmelement neu ist und noch geladen werden muss, also noch nicht zum Online-Programm gehört.
- Loaded
   Dieser Zustand zeigt an, dass das Programmelement bereits geladen wurde und damit zum Online-Programm gehört.
- Deleted
   Dieser Zustand zeigt an, dass das Programmelement bereits einmal geladen wurde und damit zum Online-Programm gehört. Allerdings wurde dieses Programmelement inzwischen im Quellprogramm gelöscht. Das Programmelement "lebt" noch, ist aber als zu löschen gekennzeichnet.

Ein Zustandsübergang kann durch folgende Ereignisse herbeigeführt werden:
- Creating
   Dieses Ereignis legt ein neues Programmelement an. Das Programmelement gehört danach aber noch nicht zum Online-Programm.
- Loading
   Dieses Ereignis lädt ein Programmelement im Rahmen eines selektiven Ladevorgangs oder im Rahmen eines so genannten Differenz-Ladens in den Speicher der Steuerung.
- Entire Loading
   Dieses Ereignis lädt alle Programmelemente in den Speicher der Steuerung und löscht die als zu löschen gekennzeichneten Programmelemente.
- Deleting
   Dieses Ereignis löscht ein Programmelement, indem es tatsächlich vernichtet oder als zu löschen gekennzeichnet wird.
- Reanimating
   Dieses Ereignis hebt die Löschkennung eines Programmelements wieder auf. Das als zu löschen gekennzeichnete Programmelement hat danach den Zustand, den es vor dem Löschereignis (Deleting) gehabt hat.
- Reorganizing
   Dieses Ereignis führt alle Programmelemente in den ursprünglichen Zustand nach dem Kreieren zurück. Als zu löschen gekennzeichnete Programmelemente werden endgültig vernichtet.

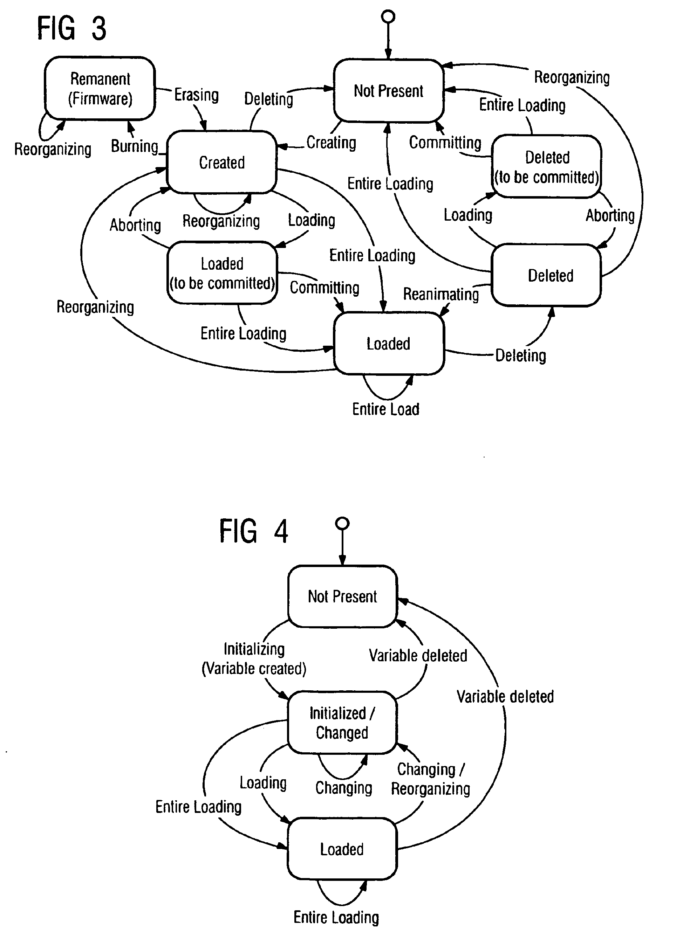

In der Darstellung in FIG 3 sind gegenüber der Darstellung in FIG 2 zusätzlich zwei Übergangszustände im Ladezustandsautomaten eingeführt worden:
- Loaded (to be committed)
   Dieser Zustand zeigt an, dass das Programmelement gerade geladen wurde. Um endgültig den Zustand "Loaded" anzunehmen, muss dies allerdings noch mit dem Ereignis "Committing" bestätigt werden.
- Deleted (to be committed)
   Dieser Zustand zeigt an, dass das Programmelement gerade aus der Bearbeitung in der Steuerung genommen wurde. Um endgültig im Speicher der Steuerung gelöscht zu werden, muss dies allerdings noch mit dem Ereignis "Committing" bestätigt werden.

Diese Übergangszustände ermöglichen auf eine einfache Art und Weise ein Rückgängigmachen eines Ladevorgangs (Aborting). Dies ist insbesondere dann sinnvoll, wenn die geladenen Programmänderungen noch einer Korrektur bedürfen und das Programm auf den Altzustand zurückgesetzt werden soll. Voraussetzung für die Einführung dieser Übergangszustände ist allerdings eine entsprechende Unterstützung des Laufzeitsystems auf der Steuerung.

FIG 4 zeigt, dass für Prozesswerte von Variablen und sonstige Attribute von Variablen ein spezieller eingeschränkter Ladezustandsautomat verwendet werden kann. Dieser verwaltet die Änderung von Attributwerten.

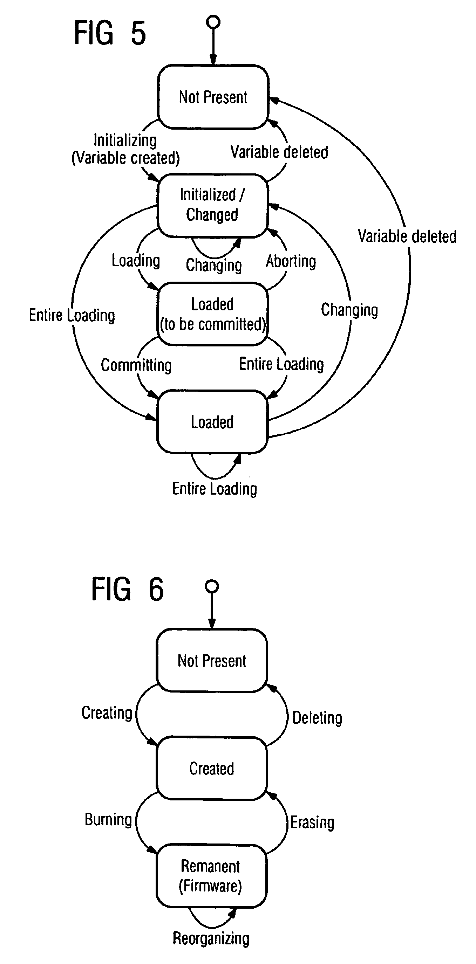

Auch für das Nachladen von Attributwerten macht der Übergangszustand "Loaded" (to be committed) Sinn, um im Zweifelsfall den Ladevorgang, also das Ändern der Attributwerte der Variablen, wieder rückgängig machen zu können, wie dies in FIG 5 dargestellt ist.

Der in FIG 6 schematisch vereinfacht dargestellte Ausschnitt des Zustandsautomaten beschreibt eine Möglichkeit der Sonderbehandlung für Programmelemente, die Bestandteil des Laufzeitsystems der Steuerung (Firmware) sind und deshalb nicht geladen werden brauchten. Programmelemente, die Bestandteil des Laufzeitsystems der Steuerung sind, werden typischerweise sofort in der Initialisierungsphase des Programms erzeugt und in den Zustand "Remanent" überführt. Beispiele für diese Art von Programmelementen sind Feldgeräte in der Automatisierungstechnik, die bereits einen Funktionssatz mitliefern, der nur noch parametriert bzw. beschaltet werden kann.

Bemerkung: Das Anlegen so genannter remanenter Programmelemente erfolgt zweistufig über die Ereignisse "Creating" und "Burning". Dies hat ausschließlich programmiertechnische Gründe, weil so Programmelemente einheitlich mittels Create-Methode erzeugt werden können. Es wäre auch vorstellbar, dass remanente Programmelemente beim Anlegen direkt in den Zustand "Remanent" überführt werden.

Insgesamt ergibt sich damit für den Ansatz gemäß der Erfindung der Vorteil, dass für jedes Programmelement der aktuelle Ladezustand für den Anwender ablesbar ist; der Anwender erhält eine vollständige Auskunft darüber, ob ein Programmelement geladen, neu erzeugt, geändert oder gelöscht ist.

Wesentliches Merkmal dieses Verfahrens ist, dass auch gelöschte Ladeobjekte (Programmelemente) vollständig verwaltet werden und damit eine uneingeschränkte Testbarkeit dieser im Online-Programm zu löschenden Ladeobjekte (Programmelemente) so lange gewährleistet bleibt, bis die zu löschenden Ladeobjekte tatsächlich nach einem entsprechenden Ladevorgang im Speicher der Steuerung gelöscht werden. Entscheidender Vorteil dieses Verfahrens ist damit die vollständige Testbarkeit des Steuerungsprogramms zu jedem beliebigen Zeitpunkt, unabhängig davon, ob bereits Änderungen am Programm vorgenommen wurden oder nicht. Wegen der graphischen Markierung der Ladeobjekte ist es für den Anwender ohne weiteres möglich, die Ladeobjekte genau danach zu unterscheiden, welche Programmelemente zum geladenen Online-Programm und welche Programmelemente zum aktuellen Offline-Programm gehören. Das Testen des geladenen Steuerungsprogramms auf der Basis des aktuellen, eventuell geänderten Quellprogramms bleibt möglich, ohne vorher die Änderungen nachzuladen. Bevor der Anwender (Inbetriebsetzungsingenieur) die Änderungen nachlädt, kann er den Online-Programmzustand noch einmal im Kontext des geänderten Quellprogramms testen.

Dieses Verfahren ist für jede Programmiersprache in der Automatisierungstechnik anwendbar. Erst dann ergibt sich für den Anwender durchgängig ein Vorteil, wie die Kontrolle über den Programmzustand unabhängig von der Programmiersprache über alle geänderten Programmteile besteht.

Einen weiteren Vorteil stellt die integrierte Verwaltung remanenter Programmelemente (Systemfunktionen) dar.

Die vollständige gemeinsame Verwaltung der Online- und Offline-Programmzustände stellt auch die Basis für die Generierung einer Änderungsliste dar. Weil alle Zustände incl. der Altzustände vor dem Ändern des Programms verwaltet werden, kann auf eine einfache Art und Weise ein "Online-Offline-Vergleich" durchgeführt werden. Der Anwender erhält somit einen Überblick über die Programmänderungen seit dem letzten Laden. Dieser stellt als Seiteneffekt ein wichtiges Merkmal dieses Verfahrens dar.

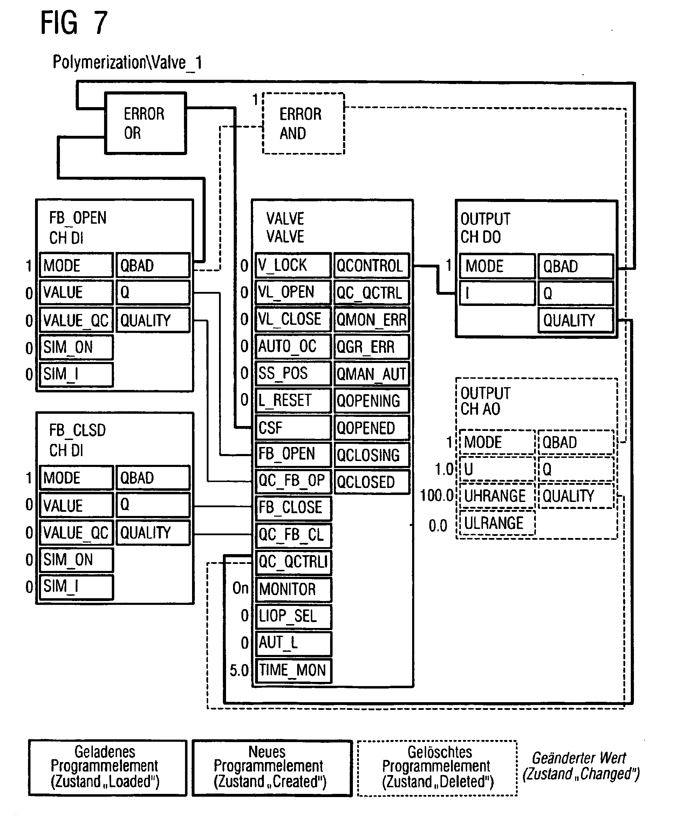

Abschließend wird in FIG 7 anhand eines Continuous Function Chart (CFC) beispielhaft veranschaulicht, wie die Ladezustände einzelner Ladeobjekte in Form von Programmelementen graphisch dem Anmelder visualisiert werden könnten. Die Darstellung verdeutlicht noch einmal die Besonderheit des erfindungsgemäßen Verfahrens, wonach auch als zum Löschen gekennzeichnete Programmelemente mit dem Ladezustand "Deleted" im Quellprogramm weiterhin vollständig erscheinen. Jedes Programmelement ist entsprechend seinem Ladezustand markiert, wobei einfache Linien ein geladenes Programmelement (Zustand "Loaded"), fette Linien ein neues Programmelement (Zustand "Created") und gestrichelte Linien ein gelöschtes Programmelement (Zustand "Deleted") darstellen.

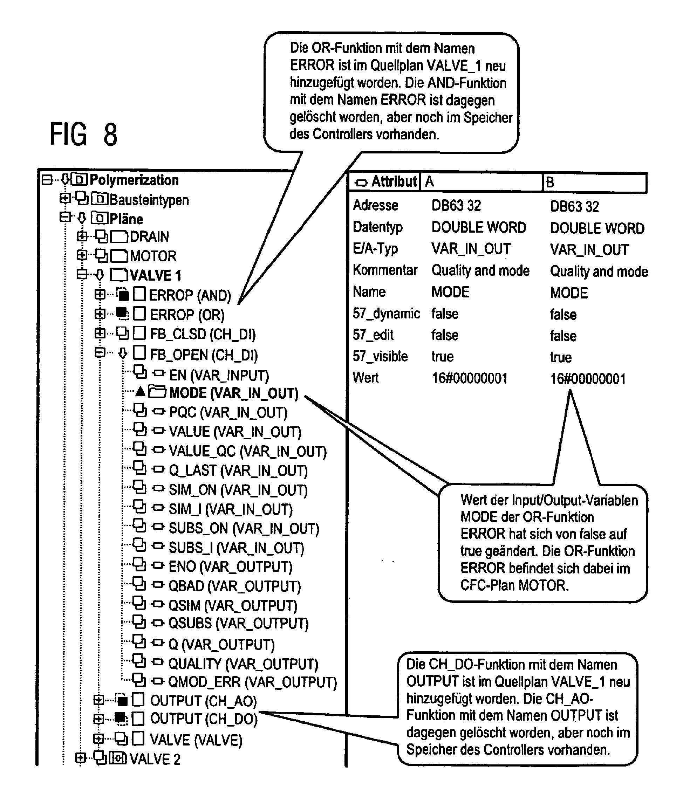

Ähnlich kann auch eine auf den jeweiligen Ladezustand von Ladeobjekten abgestellte Darstellung in anderen Präsentationsformen angepasst sein, wie dies z. B. in FIG 8 dargestellt ist.

Damit lässt sich die Erfindung kurz wie folgt darstellen: Es wird ein Verfahren zum Betrieb eines Automatisierungssystems 10, wobei von einem von dem Automatisierungssystem 10 zumindest zeitweise umfassten Programmiergerät 26 auf zumindest ein von dem Automatisierungssystem 10 umfasstes Automatisierungsgerät 14, 16, 18, 20 als Ladeobjekte insbesondere Programmelemente zur Integration in ein zur Steuerung und/oder Überwachung eines technischen Prozesses 22 vorgesehenes Steuerungsprogramm 24 transferiert werden oder transferierbar sind, wobei einem Programmelement ein erster Zustand, der dieses als für das Steuerungsprogramm 24 verfügbar kennzeichnet, oder ein zweiter Zustand, der das Programmelement als in das Steuerungsprogramm 24 integriert kennzeichnet, zugeordnet ist, angegeben, bei dem vorgesehen ist, dass jedem Programmelement mindestens ein weiterer Zustand zugeordnet wird oder zuordenbar ist, um damit insbesondere bei Programmänderungen, wenn also z. B. Programmelemente gelöscht werden, jederzeit die Möglichkeit, das Steuerungsprogramm 24 zu testen (Debugging), aufrecht zu erhalten.

## Patentansprüche

1. Verfahren zum Betrieb eines Automatisierungssystems,
wobei von einem von dem Automatisierungssystem (10) zumindest zeitweise umfassten Programmiergerät (26) auf zumindest ein von dem Automatisierungssystem (10) umfasstes Automatisierungsgerät (14, 16, 18, 20) Ladeobjekte zur Integration in ein zur Steuerung und/oder Überwachung eines technischen Prozesses vorgesehenes Steuerungsprogramm (24) transferiert werden,
wobei einem transferierten Ladeobjekt ein erster Zustand, der das transferierte Ladeobjekt als für das Steuerungsprogramm (24) verfügbar kennzeichnet, oder ein zweiter Zustand, der das transferierte Ladeobjekt als in das durch das Automatisierungssystem (10) ausführbare Steuerungsprogramm (24) integriert kennzeichnet, oder ein weiterer Zustand zugeordnet ist,
**dadurch gekennzeichnet, dass** der erste Zustand das transferierte Ladeobjekt als neu erstellt, für das Steuerungsprogramm (24) verfügbar, aber noch nicht zum Steuerungsprogramm (24) gehörig und der mindestens eine weitere Zustand, als dritten Zustand, das transferierte Ladeobjekt als gelöscht, aber noch zum Steuerungsprogramm (24) gehörig kennzeichnet, wodurch eine uneingeschränkte Testbarkeit jedes mit dem dritten Zustand gekennzeichneten Ladeobjektes gewährleistet bleibt, ohne vorher die mit dem ersten und dritten Zustand gekennzeichneten Ladeobjekte nachzuladen.

2. Betriebsverfahren nach Anspruch 1, wobei eine uneingeschränkte Testbarkeit jedes mit dem dritten Zustand **gekennzeichnet**en Ladeobjektes bis zu dessen Entfernung aus einem Speicher, auf den das Automatisierungssystem Zugriff hat, gewährleistet bleibt.

3. Betriebsverfahren nach Anspruch 1 oder 2, wobei ein Transfer von Ladeobjekten vom Programmiergerät (26) an das oder jedes Automatisierungsgerät (14, 16, 18, 20) automatisch in Abhängigkeit von deren jeweiligem Zustand erfolgt.

4. Betriebsverfahren nach einem der vorangehenden Ansprüche, wobei eine Protokollierung der jeweiligen, einem Ladeobjekt zuordenbaren Zustände sowie ein Übergang zwischen einem jeweiligen Ausgangszustand zu einem Zielzustand nach Art eines Zustandsautomaten erfolgt.

5. Computerprogramm mit durch einen Computer ausführbaren Programmcodeanweisungen zur Implementierung des Verfahrens nach einem der Ansprüche 1 bis 4, wenn das Computerprogramm auf einem Computer ausgeführt wird.

6. Speichermedium mit einem durch einen Computer ausführbaren Computerprogramm gemäß Anspruch 5.

## Claims

1. Method for operation of an automation system, with load objects for integration into a control program provided for control and/or monitoring of a technical process being transferred or able to be transferred from a programming device (26) included at least part of the time in the automation system (10) to at least one automation device (14, 16, 18, 20) included in the automation system (10),
with a transferred load object being assigned a first state which identifies the transferred load object as being available for the control program (24) or a second state which identifies the transferred load object as being integrated into the control program (24) able to be executed by the automation system (10) or a further state.
**characterised in that** the first state identifies the transferred load object as newly created, available for the control program (24), but not yet belonging to the control program (24) and the at least one further state, as third state, identifies the transferred load object as deleted, but still belonging to the control program (24), which means that unrestricted testability of each load object identified by the third state remains guaranteed, without having to reload beforehand the objects identified by the first and the third state.

2. Method of operation according to claim 1, with each load object identified by the third state guaranteed to remain available for testing until such time as it is removed from a memory to which the automation system has access.

3. Method of operation according to claim 1 or 2 , with load objects being transferred from the programming device (26) to the automation device or to each automation device (14, 16, 18, 20) automatically depending on their respective state.

4. Method of operation according to one of the previous claims, with a logging of the respective states assignable to a load object as well as a transition between a respective initial state and a target state being undertaken as a type of state automaton.

5. Computer program with program code instructions able to be executed by a computer for implementing the method according to one of the claims 1 to 4, when the computer program is executed on a computer.

6. Memory medium with a computer program able to be executed by a computer according to claim 5.

## Revendications

1. Procédé pour faire fonctionner un système d'automatisation, dans lequel on transfère d'un appareil ( 26 ) de programmation, compris au moins de temps en temps par le système ( 10 ) d'automatisation, à au moins un appareil ( 14,16,18,20 ) d'automatisation compris par le système ( 10 ) d'automatisation, des objets de charge pour les intégrer dans un programme ( 24 ) de commande prévu pour commander et/ou pour contrôler un processus technique,
dans lequel on associe à un objet de charge transféré un premier état qui caractérise l'objet de charge transféré comme disponible pour le programme ( 24 ) de commande, ou un deuxième état qui caractérise l'objet de charge transféré comme intégré dans le programme ( 24 ) de commande pouvant être réalisé par le système ( 10 ) d'automatisation, ou un autre état,
**caractérisé en ce que** le premier état établit l'objet de charge transféré comme nouveau, disponible pour le programme ( 24 ) de commande, mais n'appartenant pas encore au programme ( 24 ) de commande et le au moins un autre état en tant que troisième état caractérise l'objet de charge transféré comme effacé, mais appartenant encore au programme ( 24 ) de commande, de sorte qu'une possibilité de test illimitée de chaque objet de charge **caractérisé par** le troisième état reste assurée sans avoir à recharger au préalable les objets de charge **caractérisés par** le premier état et par le troisième état.

2. Procédé suivant la revendication 1, dans lequel une possibilité de test illimité de chaque objet de charge **caractérisé par** le troisième état reste assurée jusqu'à son élimination d'une mémoire à laquelle le système d'automatisation a accès.

3. Procédé suivant la revendication 1 ou 2, dans lequel le transfert d'objets de charge de l'appareil ( 26 ) de programmation à l'appareil ou à chaque appareil ( 14,16,18,20 ) d'automatisation s'effectue automatiquement en fonction de son état respectif.

4. Procédé suivant l'une des revendications précédentes, dans lequel un procès-verbal des états respectifs pouvant être associés à un objet de charge, ainsi qu'une transition entre un état d'origine respectif à un état visé s'effectue à la manière d'un automate d'état.

5. Programme informatique ayant des indications de code de programme pouvant être exécutées par un ordinateur pour la mise en oeuvre du procédé suivant l'une des revendications 1 à 4, lorsque le programme informatique est réalisé sur un ordinateur.

6. Support de mémoire ayant un programme informatique pouvant être réalisé par un ordinateur suivant la revendication 5.
